(19) Europäisches Patentamt
European Patent Office
Office européen des brevets

(11) **EP 3 211 385 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(51) Int Cl.:
*G01F 1/66* (2006.01)  *G01F 25/00* (2006.01)
*G01L 9/00* (2006.01)  *G01K 13/02* (2006.01)

(21) Anmeldenummer: **16202446.7**

(22) Anmeldetag: **06.12.2016**

(54) **ULTRASCHALLDURCHFLUSSMESSGERÄT**

ULTRASOUND FLOW METER

DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2016 DE 102016103260**

(43) Veröffentlichungstag der Anmeldung:
**30.08.2017 Patentblatt 2017/35**

(73) Patentinhaber: **SICK Engineering GmbH**
**01458 Ottendorf-Okrilla (DE)**

(72) Erfinder:
• **Kuppi, Heiko**
**01069 Dresden (DE)**

• **Schröter, Gerry**
**01249 Dresden (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**EP-B1- 1 293 759      US-A- 4 476 707**
**US-A1- 2014 103 274      US-A1- 2014 109 686**

EP 3 211 385 B1

**Beschreibung**

Die Erfindung betrifft eine Vorrichtung zum Messen der Strömungsgeschwindigkeit und/oder des Durchflusses eines Fluids.

In der Prozessdurchflussmesstechnik werden unter anderem Ultraschallzähler für die Durchflussmessung eingesetzt. Diese bestehen im Wesentlichen aus einem Messaufnehmer, der ein Rohrstück mit angeschweißten Anschlussflanschen umfasst, den Ultraschallwandlern, auch Ultraschallsonden genannt und die in dem Rohrstück (Mittelstück) des Messaufnehmers eingesetzt sind, sowie einer Signalverarbeitungseinheit zur Ansteuerung der Ultraschallsonden und Verarbeitung der von den Sonden abgegebenen Signale.

Das Messprinzip besteht in einer Detektion einer Laufzeitdifferenz zweier Ultraschallsignale, die in eine Richtung abgestrahlt bzw. empfangen werden, die einmal eine Komponente in Strömungsrichtung und einmal eine Komponente entgegen der Strömungsrichtung aufweist. Dazu müssen die Signale in einem bestimmten Winkel ungleich 90° zur Strömungsachse abgesendet bzw. empfangen werden. Ein Ultraschalldurchflussmessgerät nach diesem Prinzip ist aus der EP 1 293 759 B1 bekannt.

Für die Berechnung des Energieinhaltes aus dem Messwert des Durchflusses ist eine exakte Bestimmung des Druckes und der Temperatur des Fluids notwendig. Deshalb müssen Druck- und Temperatursensoren regelmäßig kalibriert werden. Das erfolgt heutzutage durch den externen Anbau von Rohrleitungen und Absperrelementen, was aufwändig ist und einen erhöhten Platzbedarf zur Folge hat.

Einen solchen Aufbau zeigt beispielsweise die US 2014/0109686 A1. Weiterhin besteht die Gefahr, dass die externen Anbauten beim Transport beschädigt werden. Auch sind die externen Anbauten den Umgebungsbedingungen ausgesetzt und müssen so erhöhten Anforderungen an Dichtheit (IP-Schutz) und Korrosionsbeständigkeit genügen. Weiterhin werden die elektrischen Leitungen der Sensoren von außen zugänglich zu einer Auswerteeinheit geführt. Für deren Schutz vor Umwelteinflüssen müssen zusätzliche Maßnahmen vorgesehen werden.

Ein Durchflussmesser für Trinkwasser, der einen Drucksensor umfasst, der aber nicht kalibriert werden kann, ist aus der DE 20 2015 006 553 U1 bekannt.

Aus der US 2014-0103274 A1 ist eine Vorrichtung nach dem Oberbegriff des Anspruchs 1 bekannt.

Aus der US 4,476,707 A ist ein Durchflussmessgerät bekannt, wobei eine externe differentielle Druckmessung erfolgt, bei der der Druckunterschied zwischen dem Druck in einem Messkopf und einem Referenzdruck mittels eines Transducers erfasst wird. Dabei liegt der Referenzdruck permanent an einer Seite des Transducers an. An der anderen Seite liegt abwechselnd der Druck aus dem Messkopf oder der Referenzdruck an. Liegt der Referenzdruck an, ist die Membran nicht ausgelenkt; liegt der Messdruck an, ist die Membran ausgelenkt, was als dem Messddruck entsprechendem Signal erfasst wird.

Ausgehend von diesem Stand der Technik ist es Aufgabe der Erfindung, ein verbessertes Messgerät bereitzustellen, mit dem die vorgenannten Nachteile vermieden werden können und das insbesondere eine einfache, kompakte und kostengünstige Kalibrierung des Drucksensors ermöglicht.

Diese Aufgabe wird gelöst durch ein Ultraschalldurchflussmessgerät mit den Merkmalen des Anspruchs 1. Weiterbildungen der Erfindung sind mit den Merkmalen der abhängigen Ansprüche 2-8 definiert.

Mit dem erfindungsgemäßen Messgerät ist eine einfache Kalibrierung des Drucksensors möglich geworden. Dazu muss der Stempel lediglich in seine zweite Position gebracht werden, wodurch der Drucksensor von der Fluidströmung abgekoppelt ist und gleichzeitig mit dem Kalibrieranschluss verbunden ist. Mittels eines an den Kalibrieranschluss angeschlossenen Geräts kann dann eine unmittelbare Kalibrierung erfolgen. Nach Kalibrierung kann der Stempel wieder in die erste Position gebracht werden, wodurch der Drucksensor von dem Kalibrieranschluss abgekoppelt und mit der Fluidströmung wieder verbunden wird. In dieser Ausbildung sind die Aufnahmen in dem Mittelstück vorteilhaft fertigbar. Diese Mechanik sowie der Drucksensor und der Kalibrieranschluss sind im Mittelstück des Messaufnehmers versenkt angeordnet und können durch einen Deckel verschlossen werden. Damit werden der Schutz der Einrichtung vor Umwelteinflüssen und der Schutz vor mechanischer Beschädigung erreicht.

Aus gleichen Gründen sind in Weiterbildung die elektrischen Verbindungsleitungen zu einer an dem Mittelstück angeordneten Auswerteinheit durch die Wandung des Mittelstücks durch entsprechende Bohrungen geführt und nach außen hin nicht sichtbar.

In Weiterbildung der Erfindung kann der Stempel durch Drehen von einer Position in die andere gebracht werden, was im einfachsten Fall durch ein Gewinde erfolgen kann, das ein Ein- und Ausschrauben des Stempels erlaubt.

In Weiterbildung der Erfindung sind die Längsrichtungen der Drucksensoraufnahme, der Kalibrieranschlussaufnahme und der Stempelaufnahme in Winkeln zueinander ausgerichtet, so dass die Drucksensoraufnahme und die Kalibrieranschlussaufnahme in die Stempelaufnahme münden und die Stempelaufnahme in das Innere des Mittelstücks mündet, wobei die Einmündungen von Drucksensoraufnahme und Kalibrieranschlussaufnahme in unterschiedlicher Stempelaufnahmetiefe liegen und die Einmündung der Drucksensoraufnahme näher zum Inneren hin liegt.

Ausgehend davon ist es vorteilhaft, wenn der Stempel an seinem stirnseitigen und zum Inneren des Mittelstücks hin gelegenen Ende dichtend gegenüber der Stempelaufnahme ausgebildet ist. Dann kann der Stempel bei der Bewegung von einer in die andere Position mehrere Funktionen erfüllen. Damit ist es nämlich möglich, dass der Stempel in der zweiten Position den Zugang zum Inneren des Mittelstücks verschließt und gleichzeitig die Verbindung zwischen Drucksensor und Kalibrieranschluss freigibt. Beim Bewegen des Stempels von der zweiten in die erste Position wird zunächst der Zugang zum Inneren freigegeben und dann die Verbindung zum Drucksensor. Der Stempel ist dann in der ersten Position, in der das stirnseitige Ende die Verbindung zwischen dem Drucksensor und dem Kalibrieranschluss verschließt.

In konstruktiv vorteilhafter Weise wird der Stempel von der ersten Position zur zweiten Position über ein Gewinde durch Drehen zum Inneren hin in das Mittelstück eingedreht.

Zusätzlich kann in dem Mittelstück ein Temperatursensor in einer Temperatursensoraufnahme gehalten sein, um die Temperatur des Fluids zu erfassen, wobei auch hier die Temperatursensoraufnahme mit einer Abdeckkappe abdeckbar ist.

Im Folgenden wird die Erfindung anhand eines Ausführungsbeispiels unter Bezugnahme auf die Zeichnung im Einzelnen erläutert. In der Zeichnung zeigen:

Fig. 1         eine Darstellung zur Verdeutlichung des Messprinzips des erfindungsgemäßen Messgeräts;
Fig. 2         eine perspektivische Ansicht des erfindungsgemäßen Messgeräts;
Fig. 3         eine schematische Schnittdarstellung entlang der Messebene;
Fig. 4 und 5     schematische Schnittdarstellungen im Bereich der Druckmessung mit unterschiedlichen Positionen des Stempels.

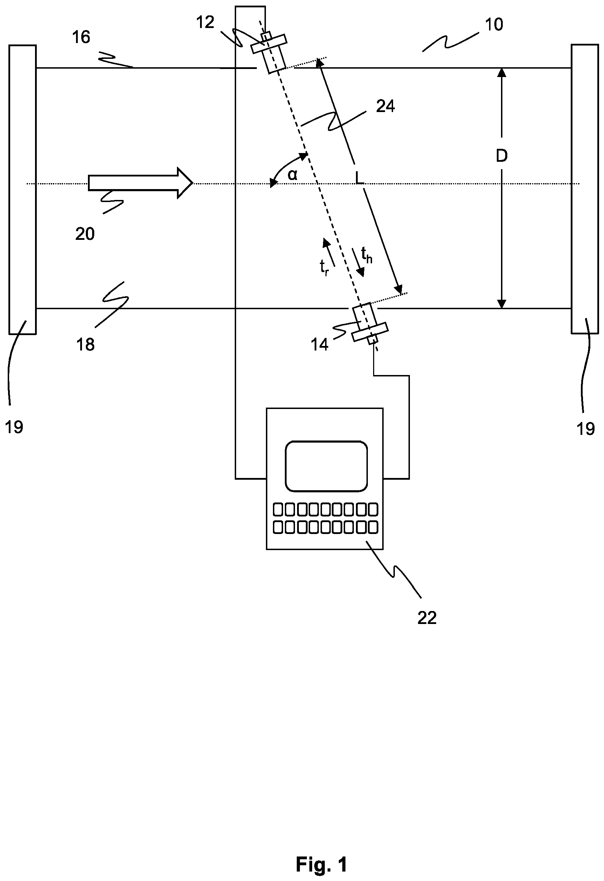

Das erfindungsgemäße Durchflussmessgerät 10 arbeitet nach dem bekannten Prinzip der Durchflussmessung mittels Ultraschall (siehe auch EP 1 293 759 B1). Dieses bekannte Messprinzip ist in Fig. 1 dargestellt. Das Durchflussmessgerät 10 umfasst wenigstens zwei Ultraschallwandler 12, 14, die in einem Winkel α ungleich 90° zur Strömungsrichtung 20 in der Wandung eines rohrartigen Mittelstücks 16 mit Nennweite D angeordnet sind, in der ein Fluid 18 in Richtung 20 strömt. Die Ultraschallwandler 12, 14 arbeiten, von einer Steuer- und Auswertungseinheit 22 angesteuert, wechselweise als Sender und Empfänger. Die auf einem Messpfad 24 durch das Fluid 18 sich ausbreitenden Ultraschallsignale erfahren in der einen Richtung (von 12 nach 14) durch die Strömung eine zusätzliche Geschwindigkeitskomponente und bei Ausbreitung in die andere Richtung (von 14 nach 12) wirkt die Geschwindigkeitskomponente mit anderem Vorzeichen, also verlangsamend. Die Laufzeit der auf dem Messpfad 24 hin und her laufenden Ultraschallpulse ist also aufgrund der Strömung 20 unterschiedlich. Die jeweiligen Empfangssignale werden der Steuer- und Auswertungseinheit 22 zugeführt, gegebenenfalls durch nicht dargestellte Schaltungselemente, wie Verstärker und A/D-Wandler, geformt und schließlich digital ausgewertet. Dazu wird die resultierende Laufzeitdifferenz gemäß

$$v = \frac{L}{(2\cos\alpha)}\left(\frac{1}{t_h} - \frac{1}{t_r}\right) \tag{1}$$

zu der gesuchten Strömungsgeschwindigkeit beziehungsweise gemäß

$$\dot{Q} = v \frac{1}{4} D^2 \pi \tag{2}$$

zu dem Volumenstrom verrechnet, worin die geometrischen Verhältnisse wie in Fig. 1 durch die folgenden Variablen beschrieben sind:

v:     Strömungsgeschwindigkeit des Fluids in der Leitung
L:     Länge des Messpfades zwischen den beiden Ultraschallwandlern
α:     Winkel, unter dem die Ultraschallwandler senden und empfangen
Q:     Volumenstrom
D:     Durchmesser der Leitung
$t_h$:     Laufzeit des Ultraschalls mit der Strömung
$t_r$:     Laufzeit des Ultraschalls gegen die Strömung

Es versteht sich, dass mit dieser Anordnung auch die Schallgeschwindigkeit des durchfließenden Gases bestimmt werden kann nach

$$SoS = \frac{2L}{(t_h+t_r)} \; .$$ 
$$(3)$$

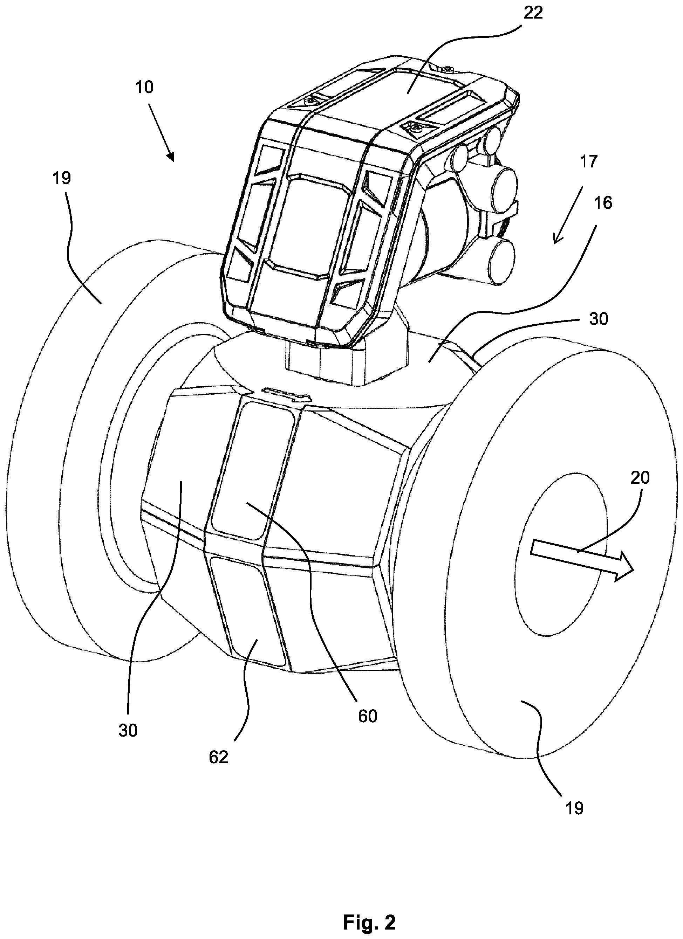

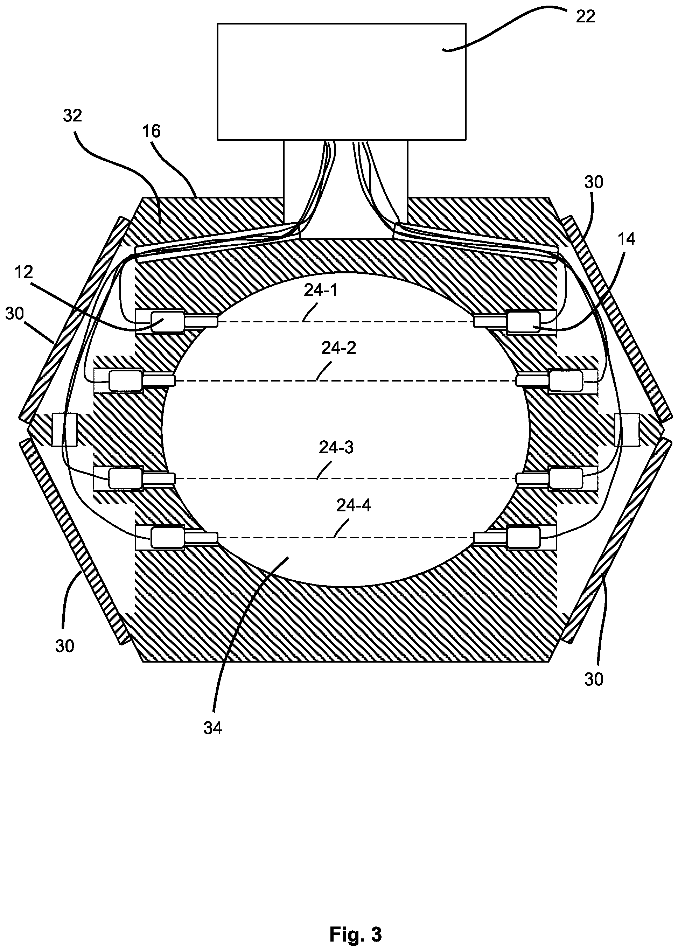

In Fig. 2 ist eine Ausführungsform des erfindungsgemäßen Messgeräts 10 in einer perspektivischen Darstellung gezeigt. Das Messgerät weist einen Messaufnehmer 17, der Anschlussflansche 19 zum Anschluss von Rohrleitungen für das Fluid und das Mittelstück 16 aufweist, durch das das Fluid strömt. Die Ultraschallwandler 12 und 14 sitzen hinter Abdeckkappen 30 in einer Wandung 32 des Mittelstücks 16. Da eine Strömung zumeist nicht über den gesamten Querschnitt homogen ist, würde ein einziger Messpfad 24 nur ungenaue Messergebnisse liefern, und deshalb sind in bekannter Weise mehrere Messpfade auf einem Querschnitt, z.B. vier parallele Messpfade 24-1, 24-2, 24-3, 24-4 übereinander, vorgesehen, die gemeinsam ausgewertet werden, z.B. durch Mittelwertbildung. Diese mehreren Messpfade sind in der Schnittdarstellung der Fig. 3 dargestellt, die schematisch einen Schnitt entlang der Messebene zeigt. Da die Messebene in einem Winkel $\alpha$ ungleich 90° zur Strömungsrichtung liegt, erscheint das eigentlich runde Innere 34 des Mittelstücks 16 in diesem Schnitt als oval.

Die eigentliche Messaufgabe besteht aber nicht nur aus der Durchflussbestimmung, also der Bestimmung des Massestroms, sondern auch aus der Bestimmung des Energieinhalts. Dazu ist es unerlässlich, auch den Druck und die Temperatur des Fluids zu bestimmen.

Der eigentliche Gegenstand der Erfindung ist die Anordnung eines Drucksensors 36 in dem Mittelstück 16. Der Drucksensor 36 ist in einer Drucksensoraufnahme 38 in der Wandung 32 des Mittelstücks 16 gehalten. Die Drucksensoraufnahme 38 hat von außen nach innen abgestuft kleiner werdende Durchmesser. In eine dieser Stufen 40 ist der Drucksensor 36 dichtend eingeschraubt.

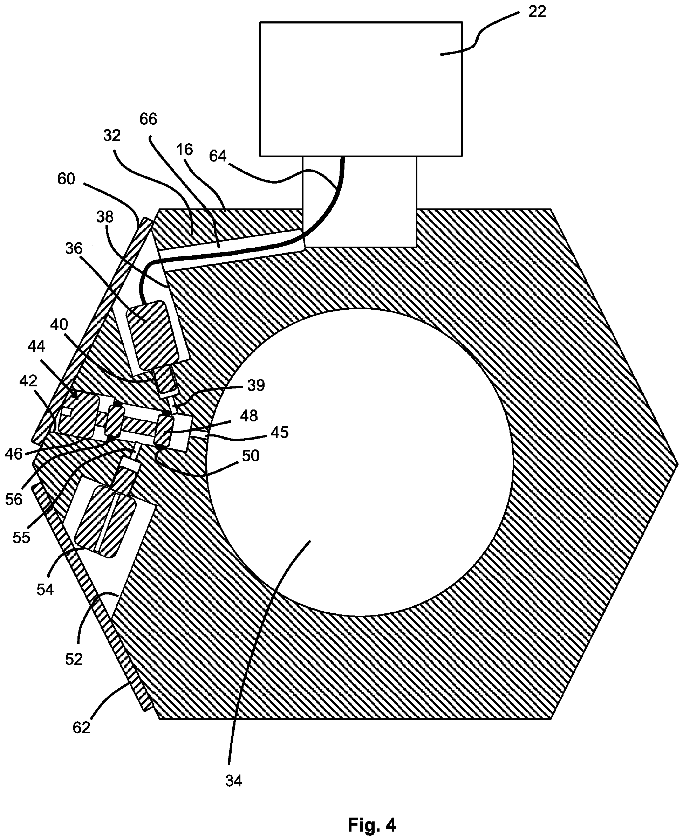

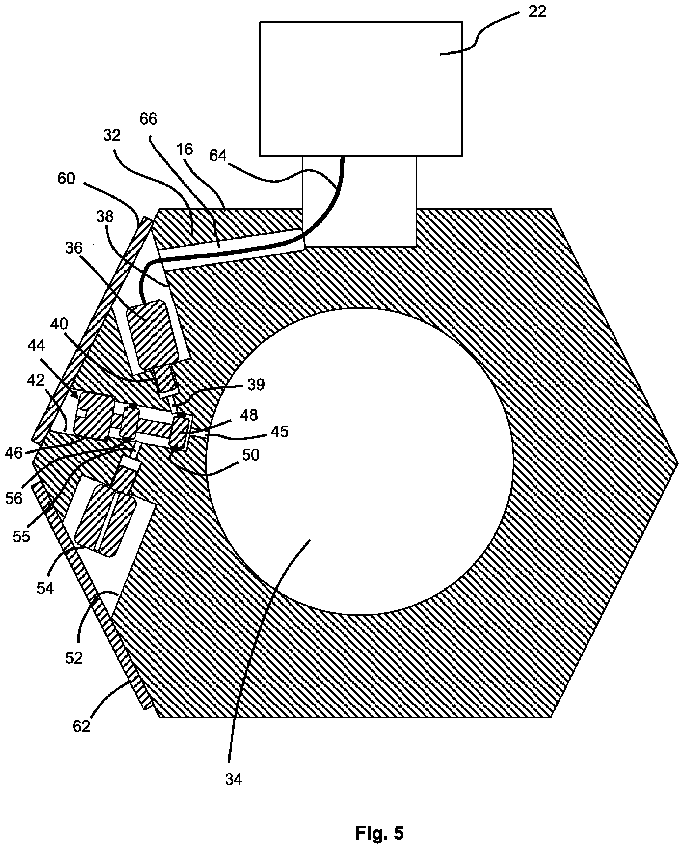

Die Drucksensoraufnahme 38 mündet mit ihrem innenseitigen Ende über einen kleinen Kanal 39 in eine Stempelaufnahme 42. Um dies in einer einfachen Konstruktion zu erreichen, sind diese Aufnahmen in einem Winkel zueinander angeordnet. In der Stempelaufnahme 42 ist ein Stempel 44 angeordnet. Die Stempelaufnahme 42 mündet in das Innere 34 des Mittelstücks 16 über einen Kanal 45 und steht daher in Fluidverbindung mit dem Inneren 34. Der Stempel 44 ist mit seinem außenseitigen Ende in die Stempelaufnahme über ein Gewinde 46 eingeschraubt und kann daher durch Drehen von einer ersten Position, die in Fig. 4 gezeigt ist, in eine zweite Position, die in Fig. 5 dargestellt ist, gebracht werden, bzw. umgekehrt von der zweiten in die erste. Der Stempel ist erfindungsgemäß an seinem stirnseitigen und zum Inneren 34 des Mittelstücks 16 hin gelegenen Ende 48 dichtend ausgebildet, z.B. mittels eines an der Stempelaufnahme 42 anliegenden Dichtringes 50.

Des Weiteren ist eine Kalibrieranschlussaufnahme 52 in der Wandung 32 des Mittelstücks 16 vorgesehen, in der ein Kalibrieranschluss 54 aufgenommen ist. Die Kalibrieranschlussaufnahme 52 ist ebenfalls stufig ausgebildet und in eine der Stufen ist der Kalibrieranschluss 54 dichtend eingeschraubt. Die Kalibrieranschlussaufnahme 52 ist in einem Winkel zur Stempelaufnahme 42 angeordnet und mündet in diese über einen Kanal 55, so dass eine Fluidverbindung besteht. Dabei liegen die Mündungen von Kalibrieranschlussaufnahme 52 und Drucksensoraufnahme 38 in unterschiedlicher Stempelaufnahmetiefe, wobei die Mündung der Kalibrieranschlussaufnahme 52 weiter außen liegt.

Die Einmündungen und der Stempel 44 bzw. die erste und zweite Position sind so dimensioniert bzw. platziert, dass in der ersten Position der Drucksensor 36 mit dem Inneren 34 des Mittelstücks 16 in Fluidverbindung steht, also die Einmündung der Drucksensoraufnahme 38 zum Inneren 34 hin offen ist und das dichtende Ende 48 des Stempels 44 die Stempelaufnahme nach außen hin verschließt (Fig. 4). In der zweiten Position steht der Drucksensor 36 über die Stempelaufnahme 42 mit dem Kalibrieranschluss 54 in Fluidverbindung. Dann ist der Stempel 44 eingeschraubt und verschließt die Stempelaufnahme 42 zum Inneren 34 hin und gibt gleichzeitig die Verbindung zwischen der Einmündung der Drucksensoraufnahme 38 und der Kalibrieranschlussaufnahme 52 frei. Damit dabei keine Umgebungsluft in diese Verbindung eindringen kann, ist der Stempel 46 auch an seinem außen gelegenen Ende mit einem Dichtring 56 abgedichtet.

Die drei Aufnahmen 38, 42 und 52 sind mit Abdeckkappen 60 und 62 abdeckbar. Um trotz Abdeckkappe noch eine elektrische Verbindung des Drucksensors 36 zur Auswerteeinheit 22 zu ermöglichen, sind Verbindungsleitungen 64 durch die Wandung 32 des Mittelstücks 16 durch entsprechende Bohrungen 66 geführt.

In Weiterbildung der Erfindung können in gleicher Weise in dem Mittelstück 16 in der Zeichnung nicht dargestellte Temperatursensoren in Temperatursensoraufnahmen gehalten sein, beispielsweise auf der dem Drucksensor 36 gegenüberliegenden Seite, um die Temperatur des Fluids zu erfassen. Die Temperatursensoraufnahmen können ebenfalls mit Abdeckkappen abdeckbar sein und elektrische Verbindungen wiederum durch die Wandung 32 zur Auswerteeinheit 22 geführt sein.

**Patentansprüche**

1.    Ultraschalldurchflussmessgerät zum Messen der Strömungsgeschwindigkeit und/oder des Durchflusses eines Fluids,

- mit einem Messaufnehmer (17), der Anschlussflansche (19) zum Anschluss von Rohrleitungen für das Fluid und ein Mittelstück (16) aufweist, durch das das Fluid strömt,
- mit wenigstens zwei in dem Mittelstück (16) aufgenommenen Ultraschallwandlern (12, 14), die ein Ultraschallwandlerpaar bilden und einen Messpfad (24) zwischen sich aufspannen, der die Strömung (20) durchsetzt,
- mit einem Drucksensor (36), der in einer Drucksensoraufnahme (38) in dem Mittelstück (16) gehalten ist,
**dadurch gekennzeichnet,**
**dass** der Drucksensor (36) über eine Stempelaufnahme (42) mit dem Inneren (34) des Mittelstücks (16) in Fluidverbindung steht,
- **dass** ein Kalibrieranschluss (54) vorgesehen ist, der in dem Mittelstück (16) in einer Kalibrieranschlussaufnahme (52) gehalten ist und der mit der Stempelaufnahme (42) in Fluidverbindung steht,
- wobei ein Stempel (44) in der Stempelaufnahme (42) in zwei Positionen bringbar ist, und in einer ersten Position der Drucksensor (36) mit dem Inneren (34) des Mittelstücks (16) in Fluidverbindung steht,
- und in einer zweiten Position der Drucksensor (36) über die Stempelaufnahme (42) mit dem Kalibrieranschluss (54) in Fluidverbindung steht,
- und wobei der Stempel an seinem stirnseitigen und zum Inneren (34) des Mittelstücks (16) hin gelegenen Ende (48) dichtend ausgebildet ist.

2. Messgerät nach Anspruch 1, **dadurch gekennzeichnet, dass** der Stempel durch Drehen von einer Position in die andere gebracht werden kann.

3. Messgerät nach einem der vorhergehenden Ansprüche, **dadurch gekennzeichnet, dass** die Längsrichtungen der Drucksensoraufnahme, der Kalibrieranschlussaufnahme und der Stempelaufnahme so zueinander ausgerichtet sind, dass die Drucksensoraufnahme und die Kalibrieranschlussaufnahme in die Stempelaufnahme münden und die Stempelaufnahme in das Innere des Mittelstücks mündet.

4. Messgerät nach Anspruch 3, **dadurch gekennzeichnet, dass** die Einmündungen von Drucksensoraufnahme und Kalibrieranschlussaufnahme in unterschiedlicher Stempelaufnahmetiefe liegen und die Einmündung der Drucksensoraufnahme näher zum Inneren hin liegt und der Stempel an seinem stirnseitigen und zum Inneren des Mittelstücks hin gelegenen Ende dichtend gegenüber der Stempelaufnahme ausgebildet ist.

5. Messgerät nach Anspruch 3, **dadurch gekennzeichnet, dass** der Stempel von der ersten Position zur zweiten Position über ein Gewinde durch Drehen zum Inneren hin in das Mittelstück eingedreht wird.

6. Messgerät nach einem der vorhergehenden Ansprüche, **dadurch gekennzeichnet, dass** die Drucksensoraufnahme, die Kalibrieranschlussaufnahme und die Stempelaufnahme mit Abdeckkappen abgedeckt sind.

7. Messgerät nach einem der vorhergehenden Ansprüche, **dadurch gekennzeichnet, dass** an dem Mittelstück eine Auswerteinheit angeordnet ist, die mit dem Drucksensor elektrisch verbunden ist und die Verbindungsleitungen durch die Wandung des Mittelstücks durch entsprechende Bohrungen geführt sind.

8. Messgerät nach einem der vorhergehenden Ansprüche, **dadurch gekennzeichnet, dass** in dem Mittelstück ein Temperatursensor in einer Temperatursensoraufnahme gehalten ist, um die Temperatur des Fluids zu erfassen und die Temperatursensoraufnahme mit einer Abdeckkappe abgedeckt ist.

**Claims**

1. Ultrasonic flowmeter for measuring the flow velocity and/or the flow rate of a fluid,

- with a measuring device (17) having connecting flanges (19) for connecting pipes for the fluid and a centre piece (16) through which the fluid flows,
- with at least two ultrasonic transducers (12, 14) accommodated in the centre piece (16), which form an ultrasonic transducer pair and span a measuring path (24) between them, which measuring path passes through the flow (20),
- with a pressure sensor (36) held in a pressure sensor receptacle (38) in the center piece (16),
**characterized**

- **in that** the pressure sensor (36) is in fluid connection with the interior (34) of the centre piece (16) via a stamp receptacle (42),
- **in that** a calibration port (54) is provided, which is held in the centre piece (16) in a calibration port receptacle (52) and is in fluid connection with the stamp receptacle (42),
- wherein a stamp (44) in the stamp receptacle (42) can be brought into two positions, and in a first position the pressure sensor (36) is in fluid communication with the interior (34) of the center piece (16),
- and in a second position the pressure sensor (36) is in fluid communication with the calibration port (54) via the stamp receptacle (42),
- and wherein the stamp is sealingly formed at its end (48) on the face side and towards the interior (34) of the center piece (16).

2. Flowmeter according to claim 1, **characterised in that** the stamp can be moved from one position to the other by rotating.

3. Flowmeter according to one of the preceding claims, **characterized in that** the longitudinal directions of the pressure sensor receptacle, the calibration port receptacle and the stamp receptacle are aligned with one another in such a way that the pressure sensor receptacle and the calibration port receptacle open out into the stamp receptacle and the stamp receptacle opens out into the interior of the centre piece.

4. Flowmeter according to claim 3, **characterized in that** the openings of the pressure sensor receptacle and the calibration port receptacle lie at different stamp receptacle depths and the opening of the pressure sensor receptacle lies closer to the interior and the stamp is formed sealingly with respect to the stamp receptacle at its end face located towards the interior of the centre piece.

5. Flowmeter according to claim 3, **characterized in that** the stamp is screwed into the centre piece from the first position to the second position via a thread by turning towards the inside.

6. Flowmeter according to one of the preceding claims, **characterized in that** the pressure sensor receptacle, the calibration port receptacle and the stamp receptacle are covered with cover caps.

7. Flowmeter according to one of the preceding claims, **characterized in that** an evaluation unit is arranged on the centre piece, which evaluation unit is electrically connected to the pressure sensor and the connecting lines are guided through the wall of the centre piece through corresponding bores.

8. Flowmeter according to one of the preceding claims, **characterized in that** a temperature sensor is held in a temperature sensor receptacle in the centre piece in order to detect the temperature of the fluid and the temperature sensor receptacle is covered with a cover cap.

**Revendications**

1. Débitmètre à ultrasons pour mesurer la vitesse d'écoulement et/ou le débit d'un fluide,

- avec un dispositif de mesure (17) comportant des brides de raccordement (19) pour raccorder des tuyaux pour le fluide et une pièce centrale (16) à travers laquelle le fluide circule,
- avec au moins deux transducteurs à ultrasons (12, 14) logés dans la pièce centrale (16), qui forment une paire de transducteurs à ultrasons et s'étendent entre eux sur un trajet de mesure (24), qui traverse le courant (20),
- avec un capteur de pression (36) maintenu dans un réceptacle de capteur de pression (38) dans la pièce centrale (16),
caractérisé
- en ce que le capteur de pression (36) est en liaison fluidique avec l'intérieur (34) de la pièce centrale (16) via un réceptacle à tampon (42),
- en ce qu'il est prévu un orifice d'étalonnage (54) qui est maintenu dans la pièce centrale (16) dans un réceptacle d'orifice d'étalonnage (52) et qui est en liaison fluide avec le réceptacle à tampon (42),
- dans laquelle un poinçon (44) dans le réceptacle de poinçon (42) peut être amené dans deux positions, et dans une première position, le capteur de pression (36) est en communication fluidique avec l'intérieur (34) de la pièce centrale (16),
- et dans une deuxième position, le capteur de pression (36) est en communication fluidique avec l'orifice d'étalonnage (54) via le réceptacle à tampon (42),
- et dans lequel le poinçon est formé de manière étanche à son extrémité (48) sur le côté frontal et vers l'intérieur (34) de la pièce centrale (16).

2. Débitmètre selon la revendication 1, **caractérisé en ce que** le tampon peut être déplacé d'une position à l'autre par rotation.

3. Débitmètre selon l'une des revendications précédentes, **caractérisé en ce que** les directions longitudinales du récipient du capteur de pression, du récipient de l'orifice d'étalonnage et du récipient du tampon sont alignées l'une avec l'autre de telle sorte que le récipient du capteur de pression et le récipient de l'orifice d'étalonnage s'ouvrent dans le récipient du tampon et le récipient du tampon débouche dans la pièce centrale.

4. Débitmètre selon la revendication 3, **caractérisé en ce que** les ouvertures du récipient du capteur de pression et du récipient de l'orifice d'étalonnage se trouvent à des profondeurs différentes du récipient du capteur de pression et l'ouverture du récipient du capteur de pression se trouve plus près de l'intérieur et le tampon est formé de manière étanche par rapport au récipient du tampon sur sa face frontale située à l'intérieur de la pièce centrale.

5. Débitmètre selon la revendication 3, **caractérisé en ce que** le poinçon est vissé dans la pièce centrale de la première position à la deuxième position par un filetage en tournant vers l'intérieur.

6. Débitmètre selon l'une des revendications précédentes, **caractérisé en ce que** le récipient du capteur de pression, le récipient de l'orifice d'étalonnage et le récipient à tampon sont recouverts de capuchons.

7. Débitmètre selon l'une des revendications précédentes, **caractérisé en ce qu'**une unité d'évaluation est disposée sur la pièce centrale, et l'unité d'évaluation est reliée électriquement au capteur de pression et les conduites de connexion sont guidées à travers la paroi de la pièce centrale à travers des trous correspondants.

8. Débitmètre selon l'une des revendications précédentes, **caractérisé en ce qu'**un capteur de température est maintenu dans un réceptacle de capteur de température dans la pièce centrale afin de détecter la température du fluide et le réceptacle de capteur de température est recouvert d'un capot.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1293759 B1
- US 20140109686 A1
- DE 202015006553 U1
- US 20140103274 A1
- US 4476707 A